# EUROPÄISCHE PATENTSCHRIFT

(11) **EP 2 804 155 B1**
(45) Veröffentlichungstag und Bekanntmachung des Hinweises auf die Patenterteilung: **24.10.2018**
(21) Anmeldenummer: 13167840.1
(22) Anmeldetag: 15.05.2013
(51) Int. Cl.: G07D 11/00

(54) **Verfahren zum Ermitteln des Bestandes einer Geldkassette mit Hilfe der Orientierung der aufgenommenen Wertscheine**
Method for determining the contents of a money box on the basis of the orientation of the inserted banknotes
Procédé de détermination de la présence d'une cassette d'argent à l'aide de l'orientation des documents de valeur qui y sont logés

(43) Veröffentlichungstag der Anmeldung: 19.11.2014
(73) Patentinhaber: Wincor Nixdorf International GmbH, 33106 Paderborn (DE)
(72) Erfinder: Wasmuth, Ulrich, 34439 Willebadessen (DE); Kremer, Michael, 59590 Geseke (DE)

(56) Entgegenhaltungen:
- EP-A1- 1 489 562
- EP-A1- 2 101 301
- EP-A2- 0 473 106
- WO-A1-2006/063555

## Beschreibung

Die Erfindung betrifft ein Verfahren zum Ermitteln des Bestandes einer Vorrichtung zur Aufnahme von Wertscheinen an Wertscheinen, bei dem vor dem Zuführen eines Wertscheins zu der Vorrichtung die Orientierung ermittelt wird und bei dem die Reihenfolge, in der die Wertscheine in der Vorrichtung aufgenommen sind, gespeichert wird.

Das Verfahren wird insbesondere zur Ermittlung des Bestandes einer Geldkassette an Wertscheinen eingesetzt. Bei Geldkassetten werden die Wertscheine in Form eines Wertscheinstapels auf ihren Kanten stehend in einem Aufnahmebereich der Geldkassette aufgenommen. Wenn die Geldkassette in einem Geldautomat, einem automatischen Kassensystem und/oder einer automatischen Tresorkasse aufgenommen ist, können Wertscheine über eine Öffnung im Gehäuse der Geldkassette automatisch zugeführt und entnommen werden. Hierbei kann es zu sogenannten Mehrfachabzügen kommen, d.h. dass ungewollt zwei oder mehr Wertscheine auf einmal abgezogen werden. Hierdurch entsteht unter anderem das Problem, dass nicht mehr bekannt ist, wie viele Wertscheine noch in der Geldkassette aufgenommen sind. Bei einer Mischspeicherung ist dann auch nicht mehr bekannt, welcher Wertschein als nächstes in der Ausgabenreihenfolge zur Entnahme bereitsteht. Somit ist ein sicheres Bestandsmanagement, was insbesondere für ein geschlossenes Cash Cycle Management notwendig ist, nicht möglich.

Im Stand der Technik ist es üblich, nach dem Auftreten eines Mehrfachabzugs die Geldkassette aus der Vorrichtung, in der sie aufgenommen war, zu entnehmen und alle in ihr aufgenommenen Wertscheine aus der Geldkassette zu entnehmen und zu zählen, so dass ein gesicherter Bestand der Geldkassette ermittelt ist. Dieses Verfahren hat den Nachteil, dass es sehr aufwendig ist und viel Zeit in Anspruch nimmt.

Aus dem Dokument DE 10 2009 035 028 A1 ist ein Verfahren zur Bestimmung des Bestandes der Geldkassette nach dem Auftreten eines Mehrfachabzugs bekannt, bei dem in einem Speicherelement der Geldkassette die Reihenfolge der einzelnen Banknoten und den einzelnen Banknoten jeweils eindeutig zugeordnet deren Seriennummer gespeichert werden. Nach dem Auftreten eines Mehrfachabzugs wird ein Wertschein der Geldkassette entnommen und dessen Seriennummer ermittelt. Auf diese Weise kann bestimmt werden, wie viele Wertschein der Mehrfachabzug umfasst hat, so dass auch wieder der Bestand der Geldkassette an Wertscheinen feststeht. Problematisch an diesem Verfahren ist es, dass zum einen die Erfassung der Seriennummer, insbesondere bei alten, abgenutzten Wertscheinen, durch Verschmutzungen und dergleichen nur schwer möglich ist und zum anderen durch die langen Seriennummern viel Speicherplatz benötigt wird, der in den Speichern der Geldkassette nur sehr begrenzt zur Verfügung steht.

Aus dem Dokument DE 10 2010 004 580 A1 ist ein weiteres Verfahren zum Ermitteln des Bestands einer Geldkassette an Wertscheinen nach dem Auftreten eines Mehrfachabzugs bekannt. Hierbei ist eine extra Sensoreinheit vorgesehen, mit deren Hilfe die Anzahl der Banknoten des Mehrfachabzugs bestimmt werden kann. Somit kann auch die Anzahl der noch in der Geldkassette aufgenommenen Wertscheine einfach errechnet werden. Nachteilig an diesem Verfahren ist, dass hierfür extra eine Sensoreinheit vorgesehen werden muss, wodurch zusätzliche Kosten entstehen und knapper Bauraum beansprucht wird.

Aus dem Dokument WO 2006/063555 A ist es bekannt, dass bei der Mischspeicherung von Wertscheinen der Bestand der Geldkassette nach einem Mehrfachabzug dadurch ermittelt werden kann, dass beim Entnehmen der Wertscheine jeweils die Denominationen bestimmt wird und mit der Denomination der aufgenommenen Wertscheine verglichen wird.

Das Dokument EP 1 489 562 A1 beschreibt ein System mit einer Methode zur Nachverfolgung von Banknoten.

Es ist Aufgabe der Erfindung, ein Verfahren zum Ermitteln des Bestands einer Vorrichtung zur Aufnahme von Wertscheinen an Wertscheinen anzugeben, mit dessen Hilfe der Bestand der Vorrichtung jederzeit einfach und zuverlässig ermittelt werden kann.

Diese Aufgabe wird durch ein Verfahren mit den Merkmalen den Anspruchs 1 gelöst. Vorteilhafte Weiterbildungen der Erfindung sind in den abhängigen Ansprüchen angegeben.

Erfindungsgemäß wird vor dem Zuführen eines Wertscheins zu der Vorrichtung dessen Orientierung ermittelt. Ferner wird zumindest bei einem Teil der in der Vorrichtung aufgenommenen Wertscheine deren jeweilige Orientierung dem jeweiligen Wertschein eindeutig zugeordnet gespeichert. Zur Ermittlung des Bestands der Vorrichtung an Wertscheinen wird von einer vorbestimmten Anzahl hintereinander entnommener Wertscheine deren jeweilige Orientierung ermittelt. Diese ermittelten Orientierungen werden mit den gespeicherten Orientierungen verglichen und in Abhängigkeit des Ergebnisses dieses Vergleiches wird der Bestand der Vorrichtung an Wertscheinen ermittelt.

Hierdurch kann über einen einfachen Vergleich der Orientierungen der Wertscheine jederzeit nur durch Entnahme der vorbestimmten Anzahl an Wertscheinen und deren Ermittlung der Orientierung der aktuelle Bestand der Vorrichtung an Wertscheinen bestimmt werden. Die Orientierung von Wertscheinen kann auf besonders einfache und zuverlässige Weise bestimmt werden. Außerdem kann dies mit in allen gängigen Vorrichtungen, in denen Geldkassetten aufgenommen werden oder in denen direkt die Wertscheine gehandhabt werden, mit ohnehin vorhandenen Sensoren erfolgen.

Bei der Vorrichtung zur Aufnahme von Wertscheinen handelt es sich insbesondere um eine Geldkassette. Hierbei kann es sich sowohl um eine Geldkassette handeln, in der die Wertscheine in Form eines Wertscheinstapels auf ihren Kanten stehend in einem Aufnahmebereich aufgenommen werden als auch um eine Geldkassette, bei der die Wertscheine auf einem Rollenspeicher zwischen zwei Folienbändern aufgewickelt aufgenommen werden. Ferner kann es sich bei der Vorrichtung zur Aufnahme von Wertscheinen auch um eine im Geldautomat, automatischen Kassensystem oder einer automatischen Tresorkasse fest aufgenommenen Speicher für Wertscheine, beispielsweise einen Rollenspeicher, handeln. Die Vorrichtung zur Aufnahme von Wertscheinen ist zum Zuführen und Entnehmen der Wertscheine insbesondere in einem Geldautomaten, einem automatischen Kassensystem, einer automatischen Tresorkasse oder einer anderen zur Handhabung von Wertscheinen aufgenommen. Die Ermittlung der Orientierung der Wertscheine vor dem Zuführen zu der Vorrichtung zur Aufnahme der Wertscheine erfolgt insbesondere über eine Sensoreinheit desjenigen Automaten, in dem die Vorrichtung zur Aufnahme der Wertscheine angeordnet ist. Insbesondere erfolgt das Ermitteln der Orientierung sowohl vor dem Zuführen als auch nach dem Entnehmen mithilfe einer Echtheitsprüfungseinheit des Geldautomaten, des automatischen Kassensystems bzw. automatischen Tresorkasse. Diese Echtheitsprüfungseinheit dient insbesondere dazu, die Echtheit von eingegebenen Wertscheinen zu ermitteln und ist somit ohnehin in der Vorrichtung vorgesehen, so dass für das Verfahren keine weitere Sensorik vorgesehen werden muss.

Die Ermittlung der Orientierung der Wertscheine erfolgt insbesondere mithilfe einer Bildaufnahmeeinheit, die mindestens ein Bild eines jeden der Vorrichtung zur Aufnahme von Wertscheinen zuzuführenden bzw. entnommenen Wertscheins ermittelt und mithilfe eines Bildverarbeitungsprogramms dessen Orientierung bestimmt.

Die Speicherung der Reihenfolge, in der die Wertscheine in der Vorrichtung aufgenommen sind und die Speicherung der jeweiligen Orientierung erfolgt insbesondere in einem Speicherelement der Vorrichtung zur Aufnahme von Wertscheinen selbst. Alternativ oder zusätzlich kann die Speicherung auch in einem Speicherelement des Geldautomaten, der automatischen Tresorkasse bzw. des automatischen Kassensystems, in dem die Vorrichtung zum Zuführen und/oder Entnehmen von Wertscheinen aufgenommen ist, erfolgen.

Die Abarbeitung der für das Verfahren notwendigen Programmschritte und/oder das Speichern der notwendigen Daten in dem Speicherelement erfolgt insbesondere über eine außerhalb der Vorrichtung zur Aufnahme von Wertscheinen angeordnete externe Steuereinheit. Vorzugsweise erfolgt dies durch eine Steuereinheit des Geldautomaten, des automatischen Kassensystems bzw. der automatischen Tresorkasse, in der die Vorrichtung zur Aufnahme von Wertscheinen aufgenommen ist.

Bei einer bevorzugten Ausführungsform wird die Orientierung jedes zugeführten Wertscheins vor dem Zuführen zur Vorrichtung ermittelt und dem entsprechenden Wertschein eindeutig zugeordnet gespeichert. Somit ist von jedem aufgenommenen Wertschein die Orientierung bekannt. Alternativ kann auch beispielsweise nur von jedem zweiten Wertschein die Orientierung ermittelt und gespeichert werden. In diesem Fall ist es für eine eindeutige Ermittlung des Bestands notwendig, eine größere Anzahl von Wertscheinen der Geldkassette zu entnehmen und deren Orientierung zu ermitteln.

Das Speichern der jeweiligen Orientierung erfolgt insbesondere in einer Datenbank in dem Speicherelement, wobei für jeden Wertschein ein Datensatz besteht, in dem zumindest die Orientierung des Wertscheins gespeichert ist. Insbesondere sind für jeden Wertschein noch weitere Daten, beispielsweise die Denomination, gespeichert.

Als Orientierung eines Wertscheins wird insbesondere jeweils dessen Ausrichtung relativ zu einer Sensoreinheit zur Detektion der Orientierung der Wertscheine ermittelt. Als Orientierung wird hierbei vorzugsweise ermittelt, ob der jeweilige Wertschein mit seiner Vorder- oder Rückseite der Sensoreinheit zugewandt ist und/oder ob der jeweilige Wertschein "auf dem Kopf" steht oder nicht. Somit ergeben sich insbesondere vier mögliche Orientierungen, nämliche "Vorderseite auf dem Kopf" stehend, "Vorderseite nicht auf dem Kopf stehend", "Rückseite auf dem Kopf stehend" und "Rückseite nicht auf dem Kopf stehend".

Die Sensoreinheit nimmt insbesondere zur Ermittlung der Orientierung ein Bild des jeweiligen Wertscheins auf und es wird mithilfe eines Bildverarbeitungsprogramms die Orientierung des Wertscheins im aufgenommenen Bild ermittelt. Insbesondere erfolgt hierzu ein Bildvergleich mit hinterlegten Soll-Bildern. Auf diese Weise kann die Orientierung auf einfache Weise zuverlässig ermittelt werden.

Es ist insbesondere eine vorbestimmte Anzahl möglicher Orientierungen definiert, wobei jeder möglichen Orientierung eine Bezeichnung zugeordnet ist. Als Orientierung wird in diesem Fall beispielsweise jeweils die entsprechende Bezeichnung dem jeweiligen Wertschein eindeutig zugeordnet gespeichert. Insbesondere wird als Bezeichnung für jede mögliche Orientierung eine Ziffer verwendet, die dem jeweiligen Wertschein zugeordnet gespeichert wird. Insbesondere werden die Bezeichnungen "1", "2", "3" und "4" verwendet, womit die Orientierungen "Vorderseite auf dem Kopf stehend", "Vorderseite nicht auf dem Kopf stehend", "Rückseite auf dem Kopf stehend" und "Rückseite nicht auf dem Kopf stehend" auf einfache Weise den Wertscheinen zugeordnet werden können. Durch Verwendung solcher kurzen Bezeichnungen kann die Zuordnung mit extrem wenig Speicherbedarf auf einfache Weise erfolgen.

Bei einer bevorzugten Ausführungsform werden die Bezeichnungen der Orientierung in der Reihenfolge, in der die Wertscheine aufgenommen sind, hintereinander gereiht, so dass sich ein Aufnahmemuster ergibt. Dieses Aufnahmemuster stellt insbesondere eine Zahlenfolge dar, wobei jede Ziffer jeweils die entsprechende Orientierung des entsprechenden Wertscheins in der Aufnahmereihenfolge ergibt. Das Aufnahmemuster ändert sich entsprechend jeweils durch die Entnahme bzw. durch das Zuführen eines Wertscheins, indem bei der Entnahme die entsprechende Ziffer des entnommenen Wertscheins entfernt und bei dem Zuführen die entsprechende Ziffer des zugeführten Wertscheins ergänzt wird.

Die Bezeichnungen der Orientierungen der vorbestimmten Anzahl entnommener Wertscheine wird vorzugsweise zu einem Vergleichsmuster hintereinander gereiht. Das Vergleichsmuster entspricht vorzugsweise hintereinander gereihten Ziffern. Zur Ermittlung des Bestands der Vorrichtung an Wertscheinen werden das Aufnahmemuster und das Vergleichsmuster miteinander verglichen. Somit kann über einen Mustervergleich auf einfache Weise bestimmt werden, wie viele Wertscheine noch in der Geldkassette aufgenommen sind.

Es ist besonders vorteilhaft, wenn die Position des Vergleichsmusters innerhalb des Aufnahmemusters ermittelt wird und wenn als Bestand der Vorrichtung an Wertscheinen alle Wertscheine angenommen werden, die in der Aufnahmereihenfolge der Wertscheine hinter der Position, in der das Vergleichsmuster in dem Aufnahmemuster vorkommt, angeordnet sind. Ist die Position des Vergleichsmusters in dem Aufnahmemuster bekannt, so ist klar, dass noch alle Wertscheine in der Vorrichtung aufgenommen sind, die durch alle in der Aufnahmereihenfolge hinter dem Vergleichsmuster angeordneten Zeichen repräsentiert werden.

Unter in der Aufnahmereihenfolge hinter einer bestimmten Position angeordnet bedeutet in diesem Zusammenhang insbesondere, dass ein Wertschein, der hinter einem anderen in der Aufnahmereihenfolge angeordnet ist, erst entnommen werden kann, wenn der zuvor angeordnete Wertschein entnommen wurde.

Es ist besonders vorteilhaft, dass, wenn der Vergleich des Vergleichsmusters zwischen Aufnahmemuster ergibt, dass das Vergleichsmuster mehrfach innerhalb des Aufnahmemusters vorkommt, als Bestand der Vorrichtung an Wertscheinen alle Wertscheine angenommen werden, die in der Aufnahmereihenfolge der Wertscheine hinter der Position, an der das in der Aufnahmereihenfolge am weitesten vorne angeordnete Vergleichsmuster vorkommt, angeordnet sind.

Die Aufnahmereihenfolge gibt die Reihenfolge an, in der die Wertscheine der Vorrichtung entnommen werden können. Kommt das Vergleichsmuster in dem Aufnahmemuster mehrfach vor, so ist es am naheliegendsten, dass es sich bei den entnommenen Wertscheinen, aus denen sich das Vergleichsmuster ergeben hat, um diejenigen Wertscheine handelt, die in der Aufnahmereihenfolge am weitesten vorne angeordnet sind, da nicht davon auszugehen ist, dass ein eventueller Mehrfachabzug oder ein sonstiger Fehler zu einer so großen Abweichung geführt hat, dass eine so große Anzahl von Wertscheinen unkontrolliert entnommen wurde, dass der aktuelle Bestand der Vorrichtung an Wertscheinen durch das in der Aufnahmereihenfolge weiter hinten angeordneten Vergleichsmuster bestimmt ist.

Bei einer bevorzugten Ausführungsform beträgt die vorbestimmte Anzahl zur Ermittlung des Bestands hintereinander entnommener Wertscheine, deren Orientierung zur Ermittlung des Bestands verwendet wird, mindestens drei Wertscheine. Vorzugsweise beträgt die vorbestimmte Anzahl, 10, 20 oder 30 Wertscheine. Je höher die Anzahl der zur Bildung des Vergleichsmusters verwendeten Wertscheine ist, umso höher ist die Anzahl der unterschiedlich möglichen Vergleichsmuster, so dass die Wahrscheinlichkeit, dass ein Vergleichsmuster in dem Aufnahmemuster mehrfach vorkommt, umso geringer wird. Bei der Verwendung von vier verschiedenen möglichen Orientierungen und einem Vergleichsmuster der Länge 3 sind 64 verschiedene Vergleichsmuster möglich. Bei der Verwendung eines Vergleichsmusters der Länge 10 ergeben sich über eine Million verschiedene Vergleichsmuster, bei der Länge 20 über eine Billion mögliche Vergleichsmuster und bei der Länge 30 sogar deutlich über eine Trillion verschiedene Vergleichsmuster. Somit kann, zumindest wenn man eine zufällige Orientierung der Wertscheine in der Vorrichtung zur Aufnahme der Wertscheine annimmt, bei der Verwendung von Vergleichsmustern mit einer Länge von 20 oder 30 Wertscheinen davon ausgegangen werden, dass es nahezu unmöglich ist, dass ein Vergleichsmuster mehrfach im Aufnahmemuster vorkommt, da das Aufnahmemuster bei Standardgeldkassetten, in denen maximal 2200 Wertscheine aufgenommen werden können, entsprechend höchstens 2200 Stellen umfasst.

Bei einer besonders bevorzugten Ausführungsform wird die vorbestimmte Anzahl für die Ermittlung des Bestands verwendeten Wertscheine variabel in Abhängigkeit des jeweils aktuellen Aufnahmemusters derart ermittelt, dass die Position des Vergleichsmusters innerhalb des Aufnahmemusters eindeutig ermittelt werden kann. Unter dem eindeutigen Ermitteln wird in diesem Zusammenhang insbesondere verstanden, dass dieses Testmuster nur einmal in dem Aufnahmemuster vorhanden ist. Hierdurch wird erreicht, dass die Anzahl zur Bestimmung des Bestands zu entnehmender Wertscheine jeweils nur so groß ist, wie dies für die eindeutige Bestimmung tatsächlich notwendig ist, so dass der Aufwand reduziert werden kann. Insbesondere ist eine minimale Anzahl voreingestellt, die zunächst entnommen wird und aus denen ein erstes Vergleichsmuster gebildet wird. Ergibt der Vergleich dieses Vergleichsmusters mit dem Aufnahmemuster, dass das Vergleichsmuster nur einmal in dem Aufnahmemuster vorkommt, so ist dieses Vergleichsmuster eindeutig, so dass der Bestand ermittelt werden kann und keine weiteren Wertscheine entnommen werden müssen.

Ergibt der Vergleich des Vergleichsmusters mit dem Aufnahmemuster jedoch, dass das Vergleichsmuster mindestens zweimal in dem Aufnahmemuster vorkommt, so wird ein weiterer Wertschein entnommen und dessen Orientierung bestimmt, so dass sich ein neues Vergleichsmuster ergibt, das mindestens eine Stelle mehr enthält als das vorhergehende erste Vergleichsmuster. Ergibt der Vergleich des zweiten Vergleichsmusters mit dem Aufnahmemuster, dass dieses nur einmal in dem Aufnahmemuster vorkommt, wird der Bestand der Vorrichtung an Wertscheinen entsprechend ermittelt. Zeigt der Vergleich jedoch, dass auch dieses zweite Vergleichsmuster mehrfach in dem Aufnahmemuster vorkommt, wird ein weiterer Wertschein entnommen, dessen Orientierung ermittelt und ein neues Vergleichsmuster gebildet. Diese Verfahrensschritte werden solange fortgeführt, bis sich ein eindeutiges Vergleichsmuster ergibt, und somit der Bestand zuverlässig ermittelt werden kann.

Bei einer besonders bevorzugten Ausführungsform wird, wenn bei der Entnahme von Wertscheinen aus der Vorrichtung ein Fehler auftritt, so dass der aktuelle Bestand nicht bekannt ist, zur Ermittlung des Bestands extra die vorbestimmte Anzahl an Wertscheinen der Vorrichtung entnommen und deren Orientierung ermittelt. Somit kann bei Doppelabzügen oder Mehrfachabzügen der Bestand wieder ermittelt werden. Die zum Ermitteln des Bestands entnommenen Wertscheine werden insbesondere in einem Zwischenspeicher zwischengespeichert, wobei nach der Ermittlung des Bestands die zwischengespeicherten Wertscheine wieder in Vorrichtung zurücktransportiert werden, so dass diese für eine Auszahlung zur Verfügung stehen. Somit kann der Bestand ermittelt werden, ohne dass die Anzahl der zur Auszahlung zur Verfügung stehenden Wertscheine hierdurch reduziert wurde.

Bei einer alternativen Ausführungsform können die zur Ermittlung des Bestands entnommenen Wertscheine auch anstatt in einem Zwischenspeicher in einer Aufnahmeeinheit zur Aufnahme nicht mehr für die Auszahlung verwendeter Wertscheine transportiert werden.

Zusätzlich oder alternativ kann auch nach jeder regulären Entnahme eines Wertscheins aus der Vorrichtung dessen Orientierung ermittelt werden und in Abhängigkeit der Orientierung der vorbestimmten Anzahl zuletzt entnommener Wertscheine das Auftreten von Mehrfachabzügen überwacht werden. Unter dem regulären Entnehmen eines Wertscheins wird insbesondere verstanden, wenn ein Wertschein für die Auszahlung von einer Bedienperson entnommen wird. Auch für die Ermittlung der Mehrfachabzüge im regulären Betrieb wird insbesondere eines der zuvor beschriebenen Mustervergleichsverfahren verwendet.

Hierdurch wird erreicht, dass jederzeit sofort festgestellt wird, wenn es zu einer Unregelmäßigkeit bei der Entnahme von Wertscheinen, also beispielsweise einem Mehrfachabzug, gekommen ist. Somit wird die Auszahlung von falschen Geldbeträgen vermieden.

Bei einer besonders bevorzugten Ausführungsform wird nach dem Ermitteln der Orientierung eines der Vorrichtung zuzuführenden Wertscheins vor dem Zuführen zu der Vorrichtung in Abhängigkeit seiner Orientierung die Orientierung des Wertscheins geändert. Ferner wird diese geänderte Orientierung, also diejenige Orientierung, in der der Wertschein in der Vorrichtung tatsächlich aufgenommen wird, als eine Orientierung dem jeweiligen Wertschein entsprechend zugeordnet gespeichert.

Die Orientierung wird insbesondere derart geändert, dass sich ein eindeutiges Aufnahmemuster ergibt. Somit wird aktiv Einfluss auf das Aufnahmemuster genommen, so dass jederzeit zuverlässig eine Bestandsermittlung möglich ist. Bedienpersonen von Geldautomaten, automatischen Kassensystemen und/oder automatischen Tresorkassen neigen dazu, die als ein Wertscheinbündel eingegebenen Wertscheine in der gleichen Orientierung einzugeben, so dass sich in der Praxis ein Aufnahmemuster ergeben würde, in dem häufig lange Abschnitte gleicher Orientierung vorkommen würden. Dies würde dazu führen, dass bei dem Vergleich des Vergleichsmusters und des Aufnahmemusters entweder Vergleichsmuster mit einer sehr großen Länge verwendet werden müssten oder die Zuordnung des Vergleichsmusters zu dem Aufnahmemuster nicht eindeutig ist, sondern nur über die Plausibilitätsbetrachtung, dass es am wahrscheinlichsten ist, dass das in der Aufnahmereihenfolge am weitesten vorne angeordnete Vergleichsmuster das richtige ist, eine Zuordnung möglich ist.

Durch das Verändern der Orientierung wird dieses Problem vermieden, so dass eine einfache und zuverlässige Bestimmung des Bestands mit einem möglichst kurzen Vergleichsmuster möglich ist.

Bei einer besonders bevorzugten Ausführungsform wird zur Ermittlung der Orientierung eines zuzuführenden Wertscheins vor dessen Zuführung das sich daraus ergebende Aufnahmemuster bestimmt und es wird überprüft, ob dieses Aufnahmemuster bezogen auf die verwendete vorbestimmte Anzahl für die Bestimmung entnommener Wertscheine, also bezogen auf die Länge des Vergleichsmusters, eindeutig ist. Ist dies der Fall, wird die Orientierung nicht verändert und der Wertschein in der ursprünglich zugeführten Orientierung der Vorrichtung zugeführt. Ergibt der Vergleich, dass das sich durch die unveränderte Zuführung des Wertscheins ergebende Aufnahmemuster nicht eindeutig wäre, so wird die Orientierung derart geändert, dass sich ein eindeutiges Vergleichsmuster ergibt.

Die Orientierung des Wertscheins wird insbesondere derart geändert, dass jedes potenziell mögliche Vergleichsmuster nur einmal innerhalb des Aufnahmemusters vorkommt.

Der Wertschein wird zur Änderung seiner Orientierung insbesondere gewendet und/oder gedreht, wobei unter dem Wenden die Veränderung zwischen Vorder- und Rückseite und unter dem Drehen die Veränderung zwischen auf dem Kopf stehenden und nicht auf dem Kopf stehenden Wertscheinen verstanden wird. Das Wenden erfolgt insbesondere mithilfe einer Weiche, vorzugsweise mit einer Dreiwegeweiche. Das Drehen kann beispielsweise über schräg zur Transportrichtung der Wertscheine angeordnete Rollenpaar erfolgen, durch die die Ausrichtung der Wertscheine und somit deren Orientierung geändert werden kann.

Weitere Merkmale und Vorteile ergeben sich aus der folgenden Beschreibung, die die Erfindung anhand von Ausführungsbeispielen in Zusammenhang mit den beigefügten Figuren näher erläutert.

Es zeigen:
- Figur 1: eine schematische Darstellung eines Geldautomaten;
- Figur 2: ein Ablaufdiagramm eines Verfahrens zur Ermittlung des Bestands einer Vorrichtung zur Aufnahme von Wertscheinen gemäß einer ersten Ausführungsform;
- Figur 3: eine Übersicht verschiedener möglicher Orientierungen von Wertscheinen;
- Figur 4: eine schematische Darstellung eines Aufnahmemusters;
- Figur 5: eine Tabelle verschiedener sich für die einzelnen Wertscheine gemäß dem Beispiel von Figur 4 ergebender Vergleichsmuster bei Verwendung von drei hintereinander entnommenen Wertscheinen zur Bestimmung des Vergleichsmusters zur Ermittlung des Bestands;
- Figur 6: ein sich nach einem Mehrfachabzug ergebendes Aufnahmemuster;
- Figur 7: ein sich ergebendes Aufnahmemuster nach der Entnahme dreier weiterer Wertscheine;
- Figur 8: ein sich ergebendes Aufnahmemuster nach der Erfassung des Bestands;
- Figur 9: ein Ablaufdiagramm eines Verfahrens zum Zuführen von Wertscheinen gemäß einer ersten Ausführungsform;
- Figur 10: ein Ablaufdiagramm eines Verfahrens zum Zuführen von Wertscheinen gemäß einer zweiten Ausführungsform; und
- Figur 11: ein Verfahren zur Bestimmung des Bestandes einer Vorrichtung zur Aufnahme von Wertscheinen an Wertscheinen gemäß einer zweiten Ausführungsform.

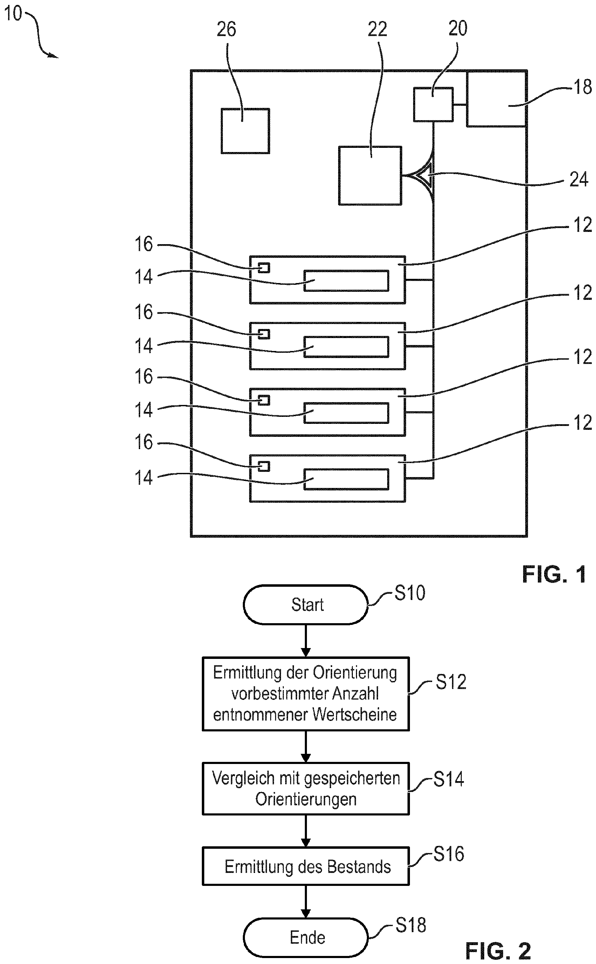

In Figur 1 ist eine schematische Darstellung eines Geldautomaten 10 dargestellt. In dem Geldautomaten 10 sind vier Geldkassetten aufgenommen, von denen eine beispielhaft mit dem Bezugszeichen 12 bezeichnet ist. Jede der Geldkassetten umfasst einen Aufnahmebereich 14 zur Aufnahme von Wertscheinen sowie ein Speicherelement 16 zur Speicherung von Informationen.

Ferner hat der Geldautomat 10 ein Eingabe- und/oder Ausgabefach 18 zur Eingabe- und/oder Ausgabe von Wertscheinen, wobei die eingegebenen Wertscheine über einen Wertscheinprüfer 20 geprüft werden, wobei die Echtheit der Wertscheine geprüft und/oder ihre Denomination bestimmt wird. Ferner ist ein Zwischenspeicher 22 vorgesehen, auf den die Wertscheine eines gemeinsam eingegebenen Wertscheinbündels solange gespeichert werden, bis alle Wertscheine einzeln auf ihre Echtheit geprüft wurden und die Eingabe von einer Bedienperson bestätigt wurde. Ferner kann der Zwischenspeicher 22 auch zur Zwischenspeicherung von Wertscheinen während der Auszahlung von Wertscheinen und/oder während interner Transportvorgänge von Wertscheinen zwischen den einzelnen Geldkassetten 12 dienen. Hierzu ist insbesondere eine Dreiwegeweiche 24 vorgesehen, mit deren Hilfe die Wertscheine zwischen dem Zwischenspeicher 22 den Geldkassetten 12 und dem Eingabe- und/oder Ausgabefach 18 transportiert werden können. Des Weiteren hat der Geldautomat 10 eine Steuereinheit 26 zur Steuerung der einzelnen Bankelemente.

Bei der Entnahme von Wertscheinen aus den Geldkassetten 12 kann es zu sogenannten Mehrfachabzügen kommen, d.h. dass unbeabsichtigt zwei oder mehr Wertscheine zusammen abgezogen werden. Dies hat zur Folge, dass der Bestand der entsprechenden Geldkassette 12 an Wertscheinen nicht mehr bekannt ist, da von den üblicherweise entlang der Transportwege vorgesehenen Lichtschranken nicht ermittelt werden kann, aus wie vielen Wertscheinen ein solcher Mehrfachabzug besteht. Die Kenntnis über den aktuellen Bestand einer jeden Geldkassette 12 an Wertscheinen ist jedoch für ein sicheres Cash Cycle Management unabdingbar, da es sonst dazu kommen kann, dass eine Geldkassette früher vollständig entleert ist, als dies von dem Cash Cycle Management angenommen ist. Besonders problematisch ist das Auftreten von Mehrfachabzügen bei der sogenannten Mischspeicherung von Wertscheinen, d.h., dass Wertscheine mindestens zweiter Denominationen in einer Geldkassette 12 aufgenommen werden. Bei einem Mehrfachabzug ist somit nicht mehr bekannt, ein Wertschein welcher Denomination als nächstes in der Aufnahmereihenfolge in der Geldkassette 12 aufgenommen ist, so dass die Steuereinheit 26 eine Auszahlung nicht mehr planen kann.

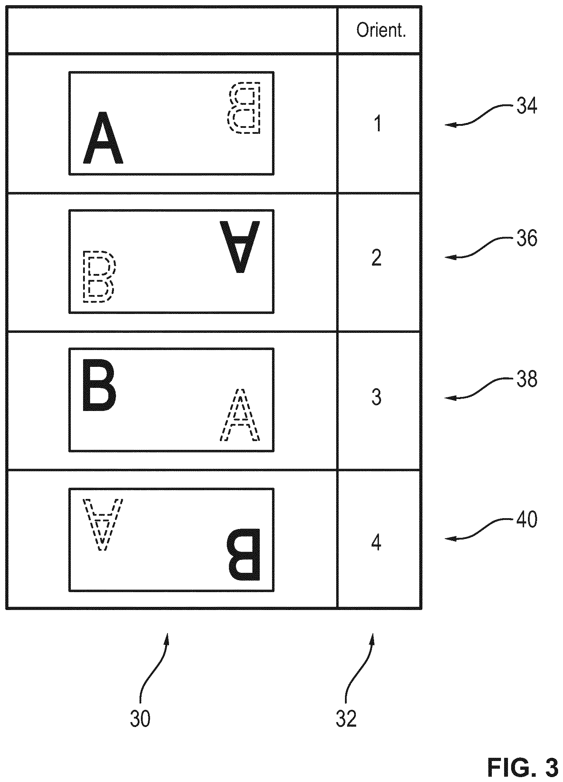

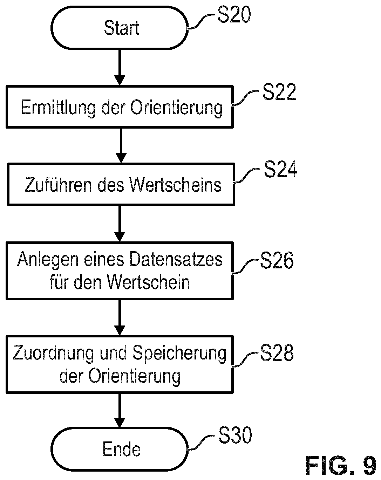

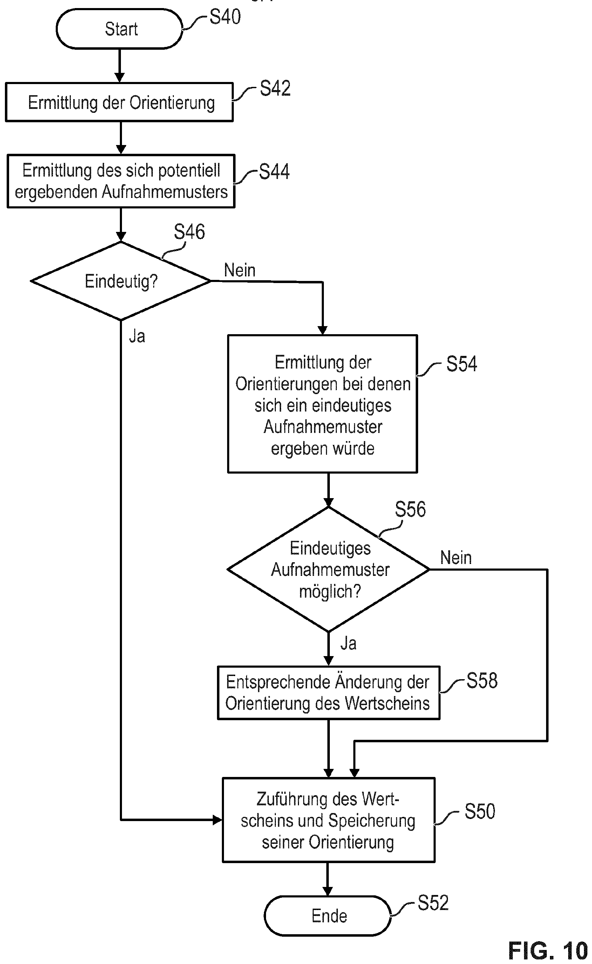

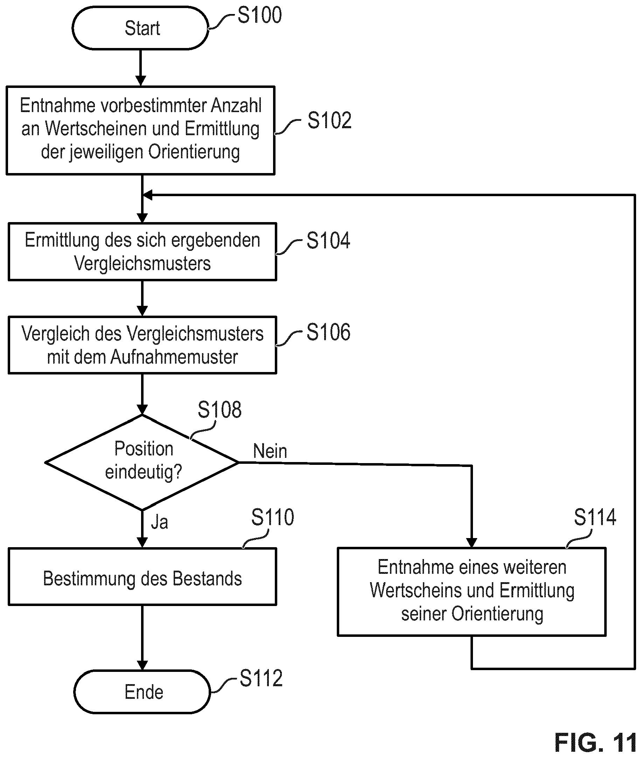

Im Folgenden wird im Zusammenhang mit Figur 2 ein Verfahren beschrieben, mit dessen Hilfe der Bestand einer Geldkassette 12 nach dem Auftreten eines Mehrfachabzugs oder eines anderen Fehlers, durch den der Bestand nicht mehr bekannt ist, auf einfache Weise wieder ermittelt werden kann. In Zusammenhang mit den Figuren 3 bis 8 werden bevorzugte Details dieses Verfahrens wiedergegeben. Die Figur 9 und 10 beschreiben Verfahren zum Zuführen von Wertscheinen zu den Geldkassetten 12, die als Verfahrensschritte in das allgemeine Verfahren aus Figur 2 integriert werden können. Figur 11 beschreibt eine bevorzugte Ausführungsform eines Verfahrens zur Ermittlung des Bestands von Geldkassetten.

Alle im Folgenden beschriebenen Verfahren können nicht nur für Geldkassetten 12, sondern für jede andere Vorrichtung zur Aufnahme von Wertscheinen, insbesondere für Rollenspeicher, verwendet werden. Insbesondere können die Verfahren auch für stationäre Vorrichtungen zur Aufnahme von Wertscheinen vorgesehen werden, d.h. für Vorrichtungen, die nicht aus einem Gerät entnommen werden können. Insbesondere handelt es sich hierbei um in einem Geldautomaten, einem automatisches Kassensystem oder einer automatische Tresorkasse integrierte Rollenspeicher.

Im Folgenden wird im Zusammenhang mit den einzelnen Verfahrensschritten bezugnehmend auf die Figur 1 beschrieben, mit welchen Bauteilen die einzelnen Verfahrensschritte ausgeführt werden können. Dies ist eine rein beispielhafte Beschreibung, die lediglich zur anschaulicheren Darlegung dient. Selbstverständlich können die einzelnen Verfahrensschritte auch über andere dem Fachmann bekannte äquivalente Bauteile erfolgen.

Nachdem das Verfahren zur Ermittlung des Bestands nach Figur 2 im Schritt S10 gestartet wurde, erfolgt in dem Schritt S12 die Ermittlung der Orientierung einer vorbestimmten Anzahl entnommener Wertscheine. Hierzu werden die einzelnen Wertscheine vorzugsweise nach und nach der Geldkassette 12 entnommen und entsprechend ihrer Orientierung nach und nach mithilfe des Wertscheinprüfers 20 bestimmt. Nach der Ermittlung einer Orientierung eines Wertscheins über den Notenprüfer 20 wird dieser in dem Zwischenspeicher 22 zwischengespeichert, bis die Orientierung der vorbestimmten Anzahl entnommener Wertscheine ermittelt wurde. Anschließend werden die Wertscheine vorzugsweise wieder von dem Zwischenspeicher 22 in die Geldkassette 12, aus der sie entnommen wurden, zurücktransportiert.

In dem Speicherelement 16 einer jeden Geldkassette 12 sind jeweils Daten mit Informationen über die in ihnen gespeicherten Wertscheinen hinterlegt. Neben der Aufnahmereihenfolge ist jeweils auch die Orientierung eines jeden Wertscheins, der in der Geldkassette 12 aufgenommen ist, diesem Wertschein eindeutig zugeordnet in dem Speicherelement 16 gespeichert. Alternativ kann die Orientierung auch in einem Speicherelement außerhalb der Geldkassette 12, beispielsweise in einem Speicherelement des Geldautomaten 10 oder einem Speicherelement einer zentralen Recheneinheit, gespeichert sein.

Im Schritt S14 werden die Orientierungen der entnommenen Wertscheine mit den in dem Speicherelement 16 gespeicherten Orientierungen verglichen.

Anhand des Ergebnisses dieses Vergleichs wird in Schritt S16 der Bestand der Geldkassette an Wertscheinen ermittelt. Hierzu wird insbesondere verglichen, an welcher Stelle in der Aufnahmereihenfolge der einzelnen Wertscheine in der Geldkassette 12 sich das bei den entnommenen Wertscheinen ergebene Muster der Orientierungen befindet. Hierüber kann auf einfache Weise zuverlässig der aktuelle Bestand der Geldkassette 12 an Wertscheinen ermittelt werden. Nachdem der Bestand ermittelt wurde, wird das Verfahren im Schritt S18 beendet.

Die zuvor beschriebenen Verfahrensschritte werden insbesondere von der Steuereinheit 26 des Geldautomaten 10 ausgeführt. Hierbei sind insbesondere entsprechende Programmdaten gespeichert, die von der Steuereinheit 26 abgearbeitet werden.

In Figur 3 ist eine Tabelle möglicher Orientierungen der Wertscheine dargestellt. Hierbei sind in Spalte 30 die verschiedenen möglichen Orientierungen anhand des sich ergebenden Bildes eines Musterwertscheins dargestellt, wobei die Spalte 32 eine entsprechende Bezeichnung für die jeweilige Orientierung angibt. Bei der in Zeile 34 dargestellten ersten Orientierung hat der Wertschein die Orientierung Vorderseite nicht auf dem Kopf stehend, d.h., dass die Vorderseite des Wertscheins einer Bilderfassungseinheit zur Aufnahme des Bildes zugewandt ist und der Wertschein nicht auf dem Kopf steht.

Bei der in Zeile 36 gezeigten zweiten Orientierung hat der Wertschein die Orientierung "Vorderseite auf dem Kopf stehend". Zeile 38 zeigt eine dritte Orientierung, bei der der Wertschein die Orientierung "Rückseite nicht auf dem Kopf stehend" hat. Zeile 40 zeigt eine vierte Orientierung, bei der der Wertschein die Orientierung Rückseite auf dem Kopf stehend hat.

Bei der Speicherung der jeweiligen Orientierungen der Wertscheine, wie diese in der Geldkassette 12 aufgenommen sind, erfolgt die Speicherung insbesondere mithilfe der in Spalte 32 dargestellten Bezeichnung. Alternativ können auch andere Bezeichnungen verwendet werden.

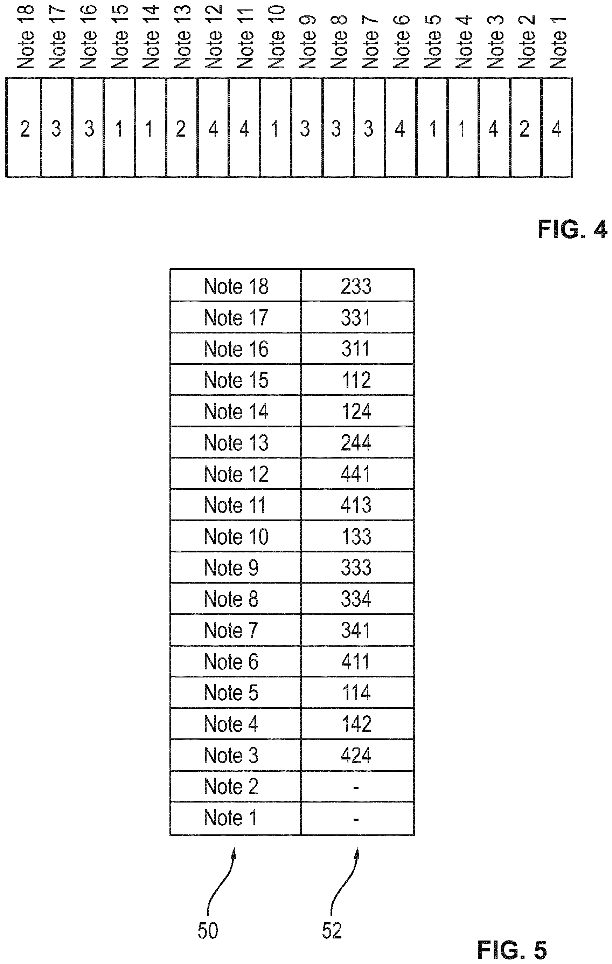

In Figur 4 ist ein Beispiel eines sich ergebendes Aufnahmemuster von 18 Wertscheinen dargestellt. Dabei ist jedem Wertschein 1 bis 18 jeweils seine Orientierung zugeordnet. So hat beispielsweise der Wertschein 1 die Orientierung 4, d.h. die Orientierung "Rückseite auf dem Kopf stehend". Der Wertschein 2 hat die Orientierung 2, d.h. die Orientierung "Vorderseite auf dem Kopf stehend" usw.

Die einzelnen Wertscheine sind hierbei in der Reihenfolge gespeichert, in der sie in der Geldkassette aufgenommen sind, wobei als erstes der Wertschein 18 entnommen werden muss, bevor der Wertschein 17 entnommen werden kann usw. Somit ergibt sich ein aus 18 Ziffern bestehendes Aufnahmemuster.

Zur Ermittlung des Bestands wird nun eine vorbestimmte Anzahl von Wertscheinen entnommen und jeweils ihre Orientierung bestimmt. Aus der Orientierung wird ein Vergleichsmuster gebildet, welches mit dem Aufnahmemuster verglichen wird.

In Figur 5 ist eine Tabelle dargestellt, wobei in der Spalte 50 die einzelnen Wertscheine aufgelistet sind und in Spalte 52 die sich ergebenden Vergleichsmuster dargestellt sind, wenn man zur Ermittlung des Bestands drei Wertscheine der Geldkassette 12 entnimmt und deren Orientierung bestimmt. So ergibt sich für die Note 18 das Vergleichsmuster 233, d.h., dass, wenn bei der Entnahme von drei Wertscheinen dieses Vergleichsmuster ermittelt wird, kann auf einfache Weise bestimmt werden, dass noch 18 Wertscheine aufgenommen sind und somit als nächstes der Wertschein 18 entnommen werden muss.

Für den Wertschein 17 ergibt sich dagegen das Muster 331, so dass, über das Auftreten dieses Musters bei der Entnahme von Wertscheinen bestimmt werden kann, dass noch 17 Wertscheine aufgenommen sind.

Insgesamt ergeben sich bei Verwendung von vier verschiedenen Orientierungen und einem dreistelligen Vergleichsmusters 43=64 verschiedene mögliche Vergleichsmuster.

Je größer die für die Ermittlung des Bestands der Geldkassette 12 entnommene Anzahl an Wertscheinen ist, also je mehr Stellen das Vergleichsmuster umfasst, umso höher ist die Anzahl der möglichen verschiedenen Vergleichsmuster und umso unwahrscheinlicher ist es, dass sich ein Vergleichsmuster mehrfach innerhalb des Aufnahmemusters befindet. Wird beispielsweise ein zehnstelliges Vergleichsmuster verwendet, so ergeben sich 410 verschiedene mögliche Vergleichsmuster, also über eine Million verschiedene Vergleichsmuster. Bei der Verwendung von zwanzigstelligen Vergleichsmustern ergeben sich 420, also über eine Billion, verschiedene Vergleichsmuster. Die Verwendung von dreißigstelligen Vergleichsmustern führt dazu, dass es 430, also über eine Trillion, verschiedene Vergleichsmuster gibt. Bei der Verwendung von dreißigstelligen Vergleichsmustern kann bei Geldkassetten, bei denen in der Regel maximal 2200 Banknoten aufgenommen sind, unter der Annahme einer zufälligen Orientierung der Wertscheine mit an Sicherheit grenzender Wahrscheinlichkeit davon ausgegangen werden, dass sich ein Vergleichsmuster nicht innerhalb des Aufnahmemusters wiederholt.

Sollte doch ein Vergleichsmuster mehrfach in dem Aufnahmemuster vorkommen, so ist es am wahrscheinlichsten, dass der Bestand demjenigen Bestand entspricht, der sich aus dem in der Aufnahmereihenfolge am weitesten vorne angeordneten Vergleichsmuster ergibt. In diesem Fall wird deshalb dieser Bestand als der aktuelle Bestand angenommen.

Das in dem Speicherelement 16 der Geldkassette 12 gespeicherte Aufnahmemuster ändert sich bei jedem Zuführen und bei jeder Entnahme eines Wertscheins. Solange wie kein Mehrfachabzug bei der Entnahme von Wertscheinen auftritt, entspricht das jeweils gespeicherte Aufnahmemuster dem jeweils aktuellen Bestand. Tritt jedoch ein Mehrfachabzug auf, was beispielsweise über einen entsprechenden Mehrfachabzugssensor ermittelt werden kann, so ist nicht bekannt, wie viele Wertscheine dieser Mehrfachabzug umfasst hat, so dass der Bestand für ein sicheres Bestandsmanagement ermittelt werden muss. Tritt beispielsweise bei dem Beispiel aus Figur 4, nachdem zwei Wertscheine, also die Wertscheine 18 und 17 regulär, entnommen wurden, ein Mehrfachabzug auf, so ist unbekannt, ob noch 16 oder weniger Noten aufgenommen sind. Über andere Sensoren des Geldautomaten 10 kann jedoch häufig ermittelt werden, wie viele Noten der Mehrfachabzug maximal umfasst haben kann. In dem folgenden Beispiel wird davon ausgegangen, dass bekannt ist, das noch zwischen 16 und 10 Wertscheine in der Geldkassette 12 aufgenommen sein müssen.

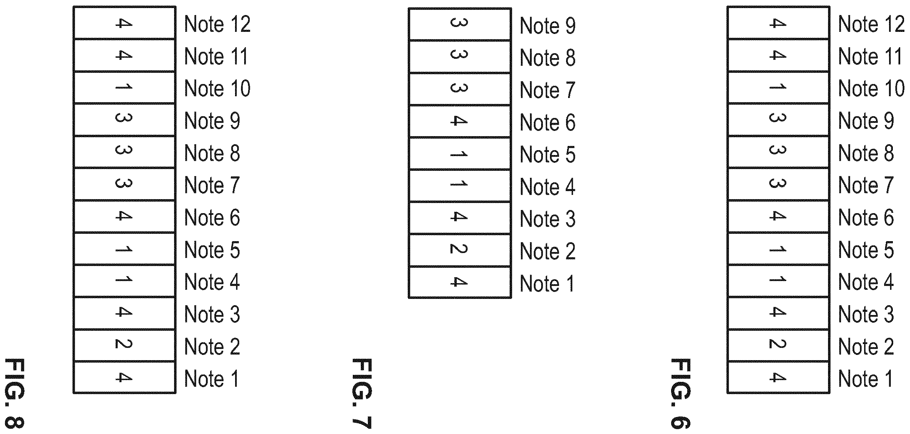

Figur 6 zeigt den tatsächlichen, aber für die Steuereinheit 26 unbekannten Bestand der Geldkassette nach dem Mehrfachabzug auf. Tatsächlich hat der Mehrfachabzug so viele Wertscheine umfasst, dass noch 12 Wertscheine aufgenommen sind.

Zur Ermittlung des Bestands werden nun drei weitere Wertscheine nacheinander der Geldkassette entnommen und jeweils deren Orientierung bestimmt. Es werden also die Wertscheine 12, 11 und 10 entnommen, ohne dass bekannt ist, dass es sich hierbei um die Wertscheine 12, 11 und 10 handelt. Durch die Bestimmung ihrer Orientierung ergibt sich das Vergleichsmuster 441. Anschließend wird dieses Vergleichsmuster 441 mit dem Aufnahmemuster aus Figur 4 verglichen. Der Vergleich zeigt, dass dieses Vergleichsmuster 441 das erste Mal für die Wertscheine 12, 11 und 10 auftritt. Somit ist bekannt, dass nach dem Auftreten des Mehrfachabzugs noch die Wertscheine 1 bis 12 in der Geldkassette 12 aufgenommen waren.

Figur 7 zeigt den aktuellen Bestand der Geldkassette 12 an Wertscheinen nach der Entnahme der drei Wertscheine des Vergleichsmusters. In diesem Fall stimmt der tatsächliche Bestand der mit dem Wissensstand über den Bestand überein, so dass der in Figur 7 dargestellte Bestand einen gesicherten Wertscheinbestand darstellt.

Die für die Bestimmung des Vergleichsmusters entnommenen Wertscheine 12, 11 und 10 werden anschließend wieder von dem Zwischenspeicher 22 zurück in die Geldkassette 12 transportiert, so dass sich der gesicherte Wertscheinbestand wie dargestellt in Figur 8 ergibt. Dieser stimmt mit dem ungesicherten Bestand aus Figur 6 überein, wobei jedoch bei der Situation, die in Figur 6 dargestellt ist, dieser Bestand für die Steuereinheit 26 nicht bekannt war und erst über die Entnahme der drei Wertscheine und die Ermittlung deren Orientierung bestimmt werden konnte.

Somit kann über den Vergleich des Aufnahmemusters mit dem ermittelten Vergleichsmuster auf einfache Weise nach dem Auftreten eines Mehrfachabzugs oder eines anderen Fehlers der aktuelle Bestand einfach ermittelt werden, ohne dass ein physisches Eingreifen einer Bedienperson insbesondere ohne dass ein Entleeren der Geldkassette 12, notwendig ist. Die Ermittlung der jeweiligen Orientierung der Wertscheine wird von dem Wertscheinprüfer 20 insbesondere jeweils mindestens ein Bild mit einer Abbildung des Wertscheins aufgenommen, wobei sich die in Spalte 30 aus Figur 3 gezeigten Bilder ergeben können. Über einen Bildvergleich mit voreingestellten Sollbildern für die jeweiligen Orientierungen kann auf einfache Weise ermittelt werden, welche Orientierung vorliegt.

In Figur 9 ist ein Ablaufdiagramm eines Verfahrens zur Aufnahme von Wertscheinen in einer Vorrichtung zur Handhabung von Wertscheinen dargestellt. Nachdem das Verfahren im Schritt S20 gestartet wurde, wird im Schritt S22, insbesondere mithilfe des Wertscheinprüfers 20, die Orientierung eines eingegebenen Wertscheins ermittelt. Anschließend wird der Wertschein im Schritt S24 der Geldkassette 12, in der er aufgenommen werden soll, zugeführt und es wird im Schritt S26 ein Datensatz in dem Speicherelement 16 für den entsprechenden Wertschein angelegt. Dieser Datensatz enthält zumindest Informationen darüber, an welcher Stelle in der Aufnahmereihenfolge dieser Wertschein angeordnet ist. Zusätzlich können weitere Informationen, beispielsweise die Denomination des Wertscheins gespeichert werden.

Im Schritt S28 wird der zugeführten Wertschein eindeutig zugeordnet seine Orientierung gespeichert. Anschließend wird das Verfahren im Schritt S30 beendet.

Bei der Zuführung mehrerer Wertscheine in einem Wertscheinbündel werden die zuvor beschriebenen Verfahrensschritte insbesondere hintereinander mehrfach abgearbeitet, wobei jedoch insbesondere zunächst die Ermittlung der Echtheit aller zugeführten Wertscheine erfolgt und die Wertscheine solange in dem Zwischenspeicher 22 zwischengespeichert werden, bis von allen Wertscheinen des Wertscheinbündels die Echtheit geprüft und die Orientierung ermittelt wurde. Erst dann erfolgt im Schritt S24 das Zuführen der einzelnen Wertscheine nacheinander und das Anlegen der einzelnen Datensätze mit den jeweiligen Orientierungen.

In Figur 10 ist ein Ablaufdiagramm eines weiteren Verfahrens zum Zuführen von Wertscheinen zu Geldkassetten 12 beschrieben. Wie auch das Verfahren nach Figur 9 führt das Verfahren nach Figur 10 dazu, dass für die aufgenommenen Wertscheine deren jeweilige Orientierung bekannt ist und sich ein Aufnahmemuster ergibt, welches für die Ermittlung des Bestands über den Vergleich mit einem Vergleichsmuster genutzt werden kann. Bei dem Verfahren nach Figur 10 wird jedoch, wie im Folgenden näher beschrieben wird, auf das Aufnahmemuster Einfluss genommen, so dass sich ein eindeutiges Aufnahmemuster ergibt.

Nachdem das Verfahren im Schritt S40 gestartet wurde, wird im Schritt S42 die Orientierung eines dem Geldautomat 10 zugeführten Wertscheins ermittelt. Anschließend wird im Schritt S44 ein sich potenziell ergebendes Aufnahmemuster bestimmt, das sich ergeben würde, wenn der Wertschein unverändert mit der ermittelten Orientierung der Geldkassette 12 zugeführt würde.

Anschließend wird im Schritt S46 überprüft, ob das sich potenziell ergebende Aufnahmemuster eindeutig ist, d.h. es wird überprüft, ob bei der voreingestellten Länge der Vergleichsmuster im Aufnahmemuster mindestens ein Vergleichsmuster mehrfach vorkommt. Ergibt der Vergleich im Schritt S46, dass das potenzielle Aufnahmemuster eindeutig ist, d.h., dass in dem Aufnahmemuster kein mögliches Vergleichsmuster mehrfach vorkommt, so wird das Verfahren im Schritt S50 damit fortgesetzt, dass der Wertschein der Geldkassette 12 zugeführt wird und seine Orientierung dem Wertschein eindeutig zugeordnet gespeichert wird. Anschließend wird das Verfahren im Schritt S52 beendet.

Ergibt sich im Schritt S46 dagegen, dass das Aufnahmemuster nicht eindeutig ist, so wird im Schritt S54 ermittelt, bei welchen Orientierungen des zugeführten Wertscheins sich ein eindeutiges Aufnahmemuster ergeben würde. Anschließend wird im Schritt S56 ausgewertet, ob ein eindeutiges Aufnahmemuster möglich ist. So wird insbesondere bestimmt, ob im Schritt S54 überhaupt eine Orientierung ermittelt werden konnte, bei der sich ein eindeutiges Aufnahmemuster ergeben würde und zum anderen, ob der Wertschein derart gedreht bzw. gewendet werden kann, dass sich eine für ein eindeutiges Aufnahmemuster notwendige Orientierung ergibt.

Ergibt die Auswertung im Schritt S56, dass kein eindeutiges Vergleichsmuster durch eine Änderung der Orientierung des Wertscheins gebildet werden kann, wird das Verfahren im Schritt S50 mit der Zuführung des Wertscheins ohne Änderung seiner Orientierung fortgesetzt.

Wurde im Schritt S56 dagegen ermittelt, dass ein eindeutiges Aufnahmemuster möglich ist, wird das Verfahren im Schritt S58 damit fortgesetzt, dass die Orientierung des Wertscheins entsprechend geändert wird bevor der Wertschein dann im Schritt S50 in der entsprechend neuen Orientierung zugeführt wird und auch die entsprechend neue Orientierung dem Wertschein eindeutig zugeordnet gespeichert wird.

Dieses Verfahren hat den Vorteil, dass, sofern möglich, ein eindeutiges Aufnahmemuster gebildet wird, so dass bei jeglichen sich ergebenen Konstellationen ohne Zweifel und ohne Wahrscheinlichkeitsannahmen über die Position des ermittelten Vergleichsmusters der Bestand zuverlässig ermittelt werden kann.

Die Änderung Orientierung von Wertscheinen erfolgt insbesondere über die Dreiwegeweiche 24. Erfolgt der Transport der Wertscheine Long Side First, d.h., dass die Wertscheine mit einer ihrer langen Kanten voran innerhalb des Geldautomaten 10 transportiert werden, kann über die Weiche 24 die Orientierung 4 in die Orientierung 1 und umgekehrt geändert werden. Ferner können die Orientierungen 2 und 3 zwischen einander geändert werden. Würde dagegen ein Transport Short Side First, d.h. mit einer der kurzen Seiten voran, erfolgen, so könnte eine Änderung der Orientierung zwischen Orientierung 1 und 3 sowie den Orientierungen 2 und 4 erfolgen.

Neben dem Wenden über die Weiche 24 könnte in einem Transportabschnitt innerhalb des Geldautomaten 10 ein oder mehrere Rollenpaare vorgesehen sein, die schräg zur Transportrichtung ausgerichtet sind, so dass durch die Rollenpaare Kräfte schräg zur Transportrichtung auf einen Wertschein ausgeübt werden können, so dass dieser gedreht werden kann. Somit kann bei dieser Ausführungsform jede Orientierung in jede andere geändert werden.

In Figur 11 ist ein Ablaufdiagramm eines Verfahrens zur Ermittlung des Bestands einer Geldkassette 12 an Wertscheinen gemäß einer zweiten Ausführungsform dargestellt. Nachdem das Verfahren im Schritt S100 gestartet wurde, wird eine vorbestimmte Anzahl an Wertscheinen der Geldkassette 12, deren Bestand ermittelt werden soll, entnommen und ihre jeweilige Orientierung wird bestimmt. Hierbei kann die Entnahme und die Bestimmung der Orientierung insbesondere wieder einzeln sukzessiv nacheinander erfolgen.

Anschließend wird im Schritt S104 das sich ergebende Vergleichsmuster bestimmt, welches dann im Schritt S106 mit dem Aufnahmemuster verglichen wird. Im Schritt S108 wird anschließend ermittelt, ob das Vergleichsmuster nur einmal in dem Aufnahmemuster vorkommt, und somit die Position des Vergleichsmusters in dem Aufnahmemuster eindeutig ist oder nicht. Ergibt der Vergleich, dass die Position eindeutig ist, so wird im Schritt S110 derjenige Bestand, der durch diese entsprechende Position wiedergegeben wird, als tatsächlicher Bestand der Geldkassette 12 angenommen, bevor das Verfahren im Schritt S112 beendet wird.

Wurde im Schritt S108 dagegen ermittelt, dass das Vergleichsmuster mindestens zweimal in dem Aufnahmemuster vorkommt, und somit die Position nicht eindeutig ist, so wird ein weiterer Wertschein im Schritt S114 der Geldkassette 12 entnommen und dessen Orientierung bestimmt. Anschließend wird mit dem Schritt S104 fortgefahren, d.h. dass als nächstes wiederum ein Vergleichsmuster ermittelt wird, was nun eine Stelle mehr umfasst. Anschließend wird im Schritt S104 wiederum das sich ergebene Vergleichsmuster bestimmt, welches im Schritt S106 mit dem Aufnahmemuster verglichen wird. In Schritt S108 wird bestimmt, ob dieses neue Vergleichsmuster nun eindeutig ist. Ist die Position des neuen Vergleichsmusters immer noch nicht eindeutig, wird mit Schritt S114 fortgefahren und ein weiterer Wertschein entnommen. Diese Schritte werden wird nun solange wiederholt, bis sich ein eindeutiges Vergleichsmuster ergibt. Alternativ können die Schritte auch nur solange wiederholt werden, bis eine voreingestellte Maximalanzahl an Wertscheinen entnommen ist und sich somit ein Vergleichsmuster dieser maximalen Länge ergeben hat. Somit kann vermieden werden, dass sich sehr lange Vergleichsmuster ergeben.

Die zuvor beschriebenen Verfahren können nicht nur zur Ermittlung des Bestands nach dem Auftreten eines Mehrfachabzugs verwendet werden, sondern auch zur Ermittlung des Bestands im regulären Betrieb, wodurch hierdurch dann wiederum ein Mehrfachabzug detektiert werden kann. Hierzu wird insbesondere nach der Entnahme eines jeden Wertscheins zusammen mit dem bereits zuvor entnommenen Wertscheinen aus deren Orientierung jeweils ein Vergleichsmuster ermittelt und dieses mit dem Aufnahmemuster verglichen. Somit kann nach jedem entnommenen Wertschein der Bestand bestimmt werden. Der so bestimmte Bestand kann mit dem Sollbestand, der sich ergeben würde, wenn kein Mehrfachabzug aufgetreten ist, also eine planmäßige Entnahme stattgefunden hat, verglichen werden. Somit kann auf einfache Weise das Auftreten eines Mehrfachabzugs detektiert werden.

### Bezugszeichenliste

- 10: Geldautomat
- 12: Geldkassette
- 14: Aufnahmebereich
- 16: Speicherelement
- 18: Eingabe- und/oder Ausgabefach
- 20: Wertscheinprüfer
- 22: Zwischenspeicher
- 24: Weiche
- 26: Steuereinheit
- 30, 32: Spalte
- 34, 36, 38, 40: Zeile
- 50, 52: Spalte
- S20 bis S114: Verfahrensschritt

## Patentansprüche

1. Verfahren zum Ermitteln des Bestandes einer Vorrichtung zur Aufnahme von Wertscheinen an Wertscheinen,
bei dem die Reihenfolge, in der die Wertscheine in der Vorrichtung (12) aufgenommen sind, gespeichert wird,
**dadurch gekennzeichnet, dass** vor dem Zuführen eines Wertscheins zu der Vorrichtung (12) dessen Orientierung ermittelt wird,
dass für zumindest einen Teil der aufgenommenen Wertscheine deren jeweilige Orientierung dem jeweiligen Wertschein eindeutig zugeordnet gespeichert wird,
und dass zur Ermittlung des Bestandes von einer vorbestimmten Anzahl hintereinander entnommener Wertscheine deren jeweilige Orientierung ermittelt wird, diese ermittelten Orientierungen mit den gespeicherten Orientierungen verglichen werden und in Abhängigkeit des Ergebnisses des Vergleichs der Bestand der Vorrichtung (12) an Wertscheinen ermittelt wird.

2. Verfahren nach Anspruch 1, **dadurch gekennzeichnet, dass** die Orientierung jedes zugeführten Wertscheins ermittelt und dem Wertschein eindeutig zugeordnet gespeichert wird.

3. Verfahren nach Anspruch 1 oder 2, **dadurch gekennzeichnet, dass** als Orientierung eines Wertscheins jeweils dessen Ausrichtung relativ zu einer Sensoreinheit (20) zur Detektion der Orientierung der Wertscheine ermittelt wird.

4. Verfahren nach Anspruch 3, **dadurch gekennzeichnet, dass** als jeweilige Orientierung ermittelt wird, ob der jeweilige Wertschein mit seiner Vorder- oder Rückseite der Sensoreinheit (20) zugewandt ist und/oder ob der jeweilige Wertschein auf dem Kopf steht oder nicht.

5. Verfahren nach einem der vorhergehenden Ansprüche, **dadurch gekennzeichnet, dass** eine vorbestimmte Anzahl möglicher Orientierungen definiert sind, dass jeder möglichen Orientierung eine Bezeichnung, insbesondere ein Wert, zugeordnet ist, und dass als Orientierung jeweils die entsprechende Bezeichnung dem jeweiligen Wertschein zugeordnet gespeichert wird.

6. Verfahren nach Anspruch 5, **dadurch gekennzeichnet, dass** die Bezeichnungen der Orientierungen in der Reihenfolge, in der die Wertscheine aufgenommen sind, hintereinander gereiht werden, so dass sich ein Aufnahmemuster ergibt, und dass die Bezeichnungen der Orientierungen der vorbestimmten Anzahl entnommener Wertscheine zu einem Vergleichsmuster hintereinander gereiht werden, und dass zur Ermittlung des Bestandes das Aufnahmemuster und das Vergleichsmuster verglichen werden.

7. Verfahren nach Anspruch 6, **dadurch gekennzeichnet, dass** die Position des Vergleichsmusters innerhalb des Aufnahmemusters ermittelt wird, und dass als Bestand der Vorrichtung (12) an Wertscheinen alle Wertscheine angenommen werden, die in der Aufnahmereihenfolge der Wertscheine vor der Position, an der das Vergleichsmuster in dem Aufnahmemuster angeordnet ist, angeordnet sind.

8. Verfahren nach einem der vorhergehenden Ansprüche, **dadurch gekennzeichnet, dass** die vorbestimmte Anzahl hintereinander entnommener Wertscheine, deren Orientierung für die Ermittlung des Bestandes verwendet wird, mindestens 3, vorzugsweise 10, 20 oder 30, beträgt.

9. Verfahren nach Anspruch 6 oder 7, **dadurch gekennzeichnet, dass** die vorbestimmte Anzahl variabel in Abhängigkeit des jeweils aktuellen Aufnahmemuster derart ermittelt wird, dass die Position des Vergleichsmusters innerhalb des Aufnahmemusters eindeutig ermittelt werden kann.

10. Verfahren nach einem der vorhergehenden Ansprüche, **dadurch gekennzeichnet, dass**, wenn bei der Entnahme von Wertscheinen aus der Vorrichtung (12) ein Fehler, beispielsweise ein Mehrfachabzug, auftritt, so dass der aktuelle Bestand nicht bekannt ist, zur Ermittlung des Bestandes extra die vorbestimmte Anzahl an Wertscheinen der Vorrichtung entnommen und deren Orientierung ermittelt wird.

11. Verfahren nach Anspruch 10, **dadurch gekennzeichnet, dass** die entnommenen Wertscheine in einem Zwischenspeicher zwischengespeichert und nach Ermittlung des Bestandes wieder in die Vorrichtung (12) zurücktransportiert wird.

12. Verfahren nach einem der vorhergehenden Ansprüche, **dadurch gekennzeichnet, dass** nach jeder regulären Entnahme eines Wertscheins dessen Orientierung ermittelt wird, und in Abhängigkeit der Orientierung der vorbestimmten Anzahl zuletzt entnommener Wertscheine das Auftreten von Mehrfachabzügen überwacht wird.

13. Verfahren nach einem der vorhergehenden Ansprüche, dass nach dem Ermitteln der Orientierung eines der Vorrichtung (12) zuzuführenden Wertscheines vor dem Zuführen in Abhängigkeit seiner Orientierung die Orientierung geändert wird, und dass diese geändert Orientierung dem Wertschein eindeutig zugeordnet gespeichert wird.

14. Verfahren nach Anspruch 13, **dadurch gekennzeichnet, dass** die Orientierung derart geändert wird, dass das sich ergebenden Aufnahmemuster eindeutig ist.

15. Verfahren nach Anspruch 13 oder 14, **dadurch gekennzeichnet, dass** der Wertschein zur Änderung seiner Orientierung gewendet und/oder gedreht wird.

## Claims

1. Method for determining the stock of notes of value in an apparatus for receiving notes of value,
in which the order in which the notes of value are received in the apparatus (12) is stored, **characterized in that**, prior to a note of value being fed to the apparatus (12), its orientation is determined,
**in that**, for at least some of the notes of value received, the respective orientation thereof is stored in a manner unambiguously assigned to the respective note of value,
and **in that**, in order to determine the stock from a predetermined number of notes of value removed one behind the other, the respective orientation of said notes is determined, these determined orientations are compared with the stored orientations and, in dependence on the comparison result, the stock of notes of value in the apparatus (12) is determined.

2. Method according to Claim 1, **characterized in that** the orientation of each note of value fed is determined and is stored in a manner unambiguously assigned to the note of value.

3. Method according to Claim 1 or 2, **characterized in that** the orientation of a note of value is determined in each case as being the orientation of said note relative to a sensor unit (20) for detecting the orientation of the notes of value.

4. Method according to Claim 3, **characterized in that** the respective orientation is determined on the basis of whether the respective note of value has its front side or rear side directed towards the sensor unit (20) and/or whether the respective note of value is upended or not.

5. Method according to one of the preceding claims, **characterized in that** a predetermined number of possible orientations are defined, **in that** each possible orientation is assigned a designation, in particular a value, and **in that** the orientation is stored in each case as being the corresponding designation assigned to the respective note of value.

6. Method according to Claim 5, **characterized in that** the designations of the orientations are lined up one behind the other in the order in which the notes of value are received, this giving a receiving pattern, and **in that** the designations of the orientations of the predetermined number of notes of value removed are lined up one behind the other to form a comparison pattern, and **in that**, in order to determine the stock, the receiving pattern and the comparison pattern are compared.

7. Method according to Claim 6, **characterized in that** the positon of the comparison pattern within the receiving pattern is determined, and **in that** the stock of notes of value in the apparatus (12) is assumed to be all the notes of value which are arranged in the receiving order of the notes of value upstream of the position at which the comparison pattern is arranged in the receiving pattern.

8. Method according to one of the preceding claims, **characterized in that** the predetermined number of notes of value removed one behind the other of which the orientation is used for determining the stock is at least 3, and preferably 10, 20 or 30.

9. Method according to Claim 6 or 7, **characterized in that** the predetermined number is determined in a variable manner in dependence on the respectively current receiving pattern such that the position of the comparison pattern within the receiving pattern can be determined unambiguously.

10. Method according to one of the preceding claims, **characterized in that** if, upon removal of notes of value from the apparatus (12), an error, for example multiple withdrawal, occurs, in which case the current stock is not known, the stock is determined, in addition, by the predetermined number of notes of value being removed from the apparatus and the orientation thereof being determined.

11. Method according to Claim 10, **characterized in that** the notes of value removed are stored on an interim basis in an interim store and, once the stock has been determined, are transported back into the apparatus (12) again.

12. Method according to one of the preceding claims, **characterized in that**, following each regular removal of a note of value, the orientation of said note is determined and, in dependence on the orientation of the predetermined number of notes of value last removed, the occurrence of multiple withdrawals is monitored.

13. Method according to one of the preceding claims, in that, once the orientation of a note of value which is to be fed to the apparatus (12) has been determined, and prior to said note being fed, the orientation is altered on an orientation-dependent basis, and in that this altered orientation is stored in a manner unambiguously assigned to the note of value.

14. Method according to Claim 13, **characterized in that** the orientation is altered such that the resulting receiving pattern is unambiguous.

15. Method according to Claim 13 or 14, **characterized in that**, in order for its orientation to be altered, the note of value is turned and/or rotated.

## Revendications

1. Procédé de détermination de la présence de documents de valeur dans un dispositif de logement de documents de valeur pour lesquels la séquence dans laquelle les documents de valeur sont logés dans le dispositif (12) est mémorisée, **caractérisé en ce qu'**avant d'amener un document de valeur dans le dispositif (12), son orientation est calculée, que pour au moins une partie des documents de valeur logés, leur orientation respective est mémorisée de façon à être associée de façon univoque au document de valeur respectif et que pour déterminer la présence d'un nombre prédéfini de documents de valeur pris les uns derrière les autres, leur orientation respective est déterminée, ces orientations déterminées étant comparées aux orientations mémorisées et en fonction du résultat de la comparaison, la présence de documents de valeur dans le dispositif (12) est déterminée.

2. Procédé selon la revendication 1, **caractérisé en ce que** l'orientation de chaque document de valeur amené est déterminée et est mémorisée de façon à être associée de façon univoque au document de valeur.

3. Procédé selon la revendication 1 ou 2, **caractérisé en ce que** comme orientation d'un document de valeur, on détermine respectivement son orientation par rapport à une unité de détection (20) servant à détecter l'orientation des documents de valeur.

4. Procédé selon la revendication 3, **caractérisé en ce que** comme orientation respective, on détermine si le document de valeur respectif est orienté avec son côté avant ou arrière vers l'unité de détection (20) et/ou si le document de valeur respectif tient ou non sur la tête.

5. Procédé selon l'une quelconque des revendications précédentes, **caractérisé en ce qu'**un nombre prédéfini d'orientations possibles est défini, qu'une désignation, notamment une valeur, est associée à chaque orientation possible et que comme orientation, on mémorise respectivement la désignation correspondante associée au document de valeur respectif.

6. Procédé selon la revendication 5, **caractérisé en ce que** les désignations des orientations dans la séquence dans laquelle les documents de valeur sont logés se suit, de sorte qu'un modèle de logement est obtenu et que les désignations des orientations du nombre prédéfini des documents de valeur pris se suivent pour former un modèle de comparaison et que pour déterminer la présence, le modèle de logement et le modèle de comparaison sont comparés.

7. Procédé selon la revendication 6, **caractérisé en ce que** la position du modèle de comparaison est déterminée à l'intérieur du modèle de logement et que comme présence de documents de valeur dans le dispositif (12), on suppose que tous les documents de valeur sont disposés, dans la séquence de logement des documents de valeur, avant la position dans laquelle le modèle de comparaison est disposé dans le modèle de logement.

8. Procédé selon l'une quelconque des revendications précédentes, **caractérisé en ce que** le nombre prédéfini de documents de valeur pris les uns derrière les autres dont l'orientation est utilisée pour la détermination de la présence est au moins de 3, de préférence de 10, 20 ou 30.

9. Procédé selon la revendication 6 ou 7, **caractérisé en ce que** le nombre prédéfini est déterminé de façon variable en fonction du modèle de logement respectivement actuel de telle sorte que la position du modèle de comparaison puisse être déterminée de façon univoque à l'intérieur du modèle de logement.

10. Procédé selon l'une quelconque des revendications précédentes, **caractérisé en ce que** lorsqu'en cas de retrait de documents de valeur hors du dispositif (12) une erreur, par exemple un retrait multiple se produit, de sorte que la présence actuelle n'est pas connue, on prend pour déterminer la présence supplémentaire le nombre prédéfini de documents de valeur du dispositif et on détermine leur orientation.

11. Procédé selon la revendication 10, **caractérisé en ce que** les documents de valeur retirés sont mémorisés de façon temporaire dans une mémoire tampon et après détermination de la présence de nouveau transportés dans le dispositif (12).

12. Procédé selon l'une quelconque des revendications précédentes, **caractérisé en ce qu'**après chaque retrait réglementaire d'un document de valeur, son orientation est déterminée et que la survenue de retraits multiples est surveillée en fonction de l'orientation du nombre prédéfini de documents de valeur pris en derniers.

13. Procédé selon l'une quelconque des revendications précédentes, en ce que l'orientation est changée avant son amenée en fonction de son orientation après la détermination de l'orientation d'un des documents de valeur amenés au dispositif (12) et cette orientation modifiée étant mémorisée de façon à être associée de façon univoque au document de valeur.

14. Procédé selon la revendication 13, **caractérisé en ce que** l'orientation est modifiée de telle sorte que le modèle de logement obtenu est univoque.

15. Procédé selon la revendication 13 ou 14, **caractérisé en ce que** le document de valeur est tourné et/ou pivoté pour faire varier son orientation.
